# EUROPÄISCHE PATENTSCHRIFT

(11) **EP 1 735 896 B1**
(45) Veröffentlichungstag und Bekanntmachung des Hinweises auf die Patenterteilung: **25.07.2012**
(21) Anmeldenummer: 05738820.9
(22) Anmeldetag: 05.04.2005
(51) Int. Cl.: B60N 2/02, B60N 2/22, B60N 2/225, B60N 2/235, H02K 7/116

(54) **EINSTELLER FÜR EINEN FAHRZEUGSITZ**
REGULATING ELEMENT FOR A VEHICLE SEAT
ELEMENT DE REGLAGE DESTINE A UN SIEGE DE VEHICULE

(30) Priorität: 15.04.2004 DE 102004019466
(43) Veröffentlichungstag der Anmeldung: 27.12.2006
(73) Patentinhaber: KEIPER GmbH & Co. KG, 67657 Kaiserslautern (DE)
(72) Erfinder: SCHÜLER, Rolf, 42579 Heiligenhaus (DE); BERRES, Michael, 51375 Leverkusen (DE); BOSSMANNS, Bernd, 40699 Erkrath (DE); KALMUS, Karsten, 44799 Bochum (DE); SCHUHN, Christoph, 40468 Düsseldorf (DE); VOSS, Heinz, 51375 Leverkusen (DE)
(74) Vertreter: Finger, Catrin
(86) Internationale Anmeldenummer: PCT/DE2005/000634
(87) Internationale Veröffentlichungsnummer: WO 2005/100078

(56) Entgegenhaltungen:
- EP-A- 1 110 804
- FR-A- 2 567 462
- US-A- 5 586 833

## Beschreibung

Die Erfindung betrifft eine Einstellvorrichtung für einen Fahrzeugsitz mit den Merkmalen des Oberbegriffs des Patentanspruches 1.

Derartige Einstellvorrichtungen werden für motorisch einstellbare Fahrzeugsitze eingesetzt, um durch Bewegen einzelner Komponenten relativ zueinander eine für den Insassen optimale Sitzposition zu erreichen. Mittels der Getriebestufe kann die Drehzahl herabgesetzt und zugleich das abgegebene Drehmoment erhöht werden. Eine Einstellvorrichtung der eingangs genannten Art ist in der EP 1 110 804 A1 beschrieben mit einem lastaufnehmenden Getriebe, einer seitlich davon angeordnete Getriebestufe und einen die Getriebestufe antreibenden Motor, wobei die Getriebstufe und der Motor als Antriebseinheit innerhalb eines haubenförmigen Handrads angeordnet sind, welches alternativ das lastaufnehmende Getriebe antreibt.

Der Erfindung liegt die Aufgabe zu Grunde, eine Einstellvorrichtung der eingangs genannten Art zu verbessern. Diese Aufgabe wird erfindungsgemäß durch eine Einstellvorrichtung mit den Merkmalen des Patentanspruches 1 gelöst. Vorteilhafte Ausgestaltungen sind Gegenstand der Unteransprüche.

Der Einsteller, in dessen lastaufnehmendes Getriebe die Antriebseinheit integriert ist, wobei das lastaufnehmende Getriebe direkt oder indirekt einen um eine Achse rotierenden Rotor lagert, hat den Vorteil, dass gesonderte Übertragungselemente zwischen der Antriebseinheit und dem lastaufnehmenden Getriebe, beispielsweise einen schlechten Wirkungsgrad aufweisende Schneckengetriebe oder dergleichen, sowie gesonderte Lagerelemente für den Rotor entbehrlich sind. Wenn zudem eine durchgehend spielfreie Lagerung des Rotors über die Getriebestufe bis zu dem lastaufnehmenden Getriebe erfolgt, werden die Laufgeräusche stark reduziert.

Die Beschlagteile, welche das lastaufnehmende Getriebe bilden, oder wenigstens eines davon, sind um ein oder relativ zu einem Zentrum beweglich, beispielsweise ein mit einer Zahnstange kämmendes Zahnrad um seine Nabe oder zwei ineinander greifende Beschlagteile eines Exzenterumlaufgetriebes um den Exzenter herum. Von der in das lastaufnehmende Getriebe integrierten, sehr klein dimensionierbaren Antriebseinheit (Motor samt Getriebestufe) ist wenigstens die Getriebestufe, vorzugsweise die gesamte Antriebseinheit - zumindest weitgehend - in diesem Zentrum angeordnet, d.h. in etwa in der gleichen Ebene (oder besser Schicht), in der sich das oder die Beschlagteile bewegen. Der Durchmesser der im Zentrum des lastaufnehmenden Getriebes angeordneten Antriebseinheit ist vorzugsweise kleiner oder maximal gleich dem Durchmesser der Verzahnungen für die Getriebeverbindung zwischen den Beschlagteilen. Mit dieser Integration wird der benötigte Bauraum gering gehalten, insbesondere in der durch die Achse des Motors definierten axialen Richtung, welche vorzugsweise senkrecht zur besagten Ebene steht. Der gegenüber einer bekannten Lösung gewonnene Bauraum kann für eine verbesserte Lastaufnahme im Crashfall genutzt werden.

Das Einsatzgebiet eines solchen Einstellers ist nicht auf einen Fahrzeugsitz beschränkt. Vielmehr kann ein Einsatz auch an einer anderen Stelle in einem Fahrzeug erfolgen, beispielsweise in einem Fensterheber, einem Außenspiegel oder einem Schiebedach.

Um die Herstellungskosten für den Einsteller gering zu halten, wird die Verwendung von einerseits preiswerten Motoren mit geringer Stromaufnahme und geringem Drehmoment und andererseits Getriebestufen mit sehr hoher Untersetzung angestrebt, wobei elektronische Steuerungen und Kopplungen gegenüber mechanischen Lösungen der Vorzug gegeben wird, beispielsweise auch bei der Kopplung und Synchronisation zweier einzelner Einsteller auf verschiedenen Seiten eines Fahrzeugsitzes.

Elektronisch kommutierte, bürstenlose Motoren bieten einen hohen elektromechanischen Wirkungsgrad bei gleichzeitig geringem Bauraum und niedrigem Geräuschniveau. Mehrere Motoren können mit der zugehörigen Elektronik ohne wesentlichen Zusatzaufwand in ihrer Drehzahl oder Position miteinander synchronisiert werden. Die Art der Kommutierung bietet die Möglichkeit, einen Blockierzustand zu erkennen, ein maximal zulässiges Blockiennoment elektrisch zu definieren und die Temperatur zu überwachen, und damit eine gegenüber Bürstenmotoren höhere Energiedichte des elektromagnetischen Wandlers zu realisieren, was eine deutliche Reduktion von Bauraum und Gewicht erlaubt. Die Integration der Steuerelektronik in den Motor bietet Vorteile bei der Erkennung von Blocksituationen, der Auswertung vorhandener Sensoren und der Abstimmung zwischen Elektronikfunktion und anzutreibender Vorrichtung, beispielsweise bei der Aufnahme oder Programmierung von Parametern des Motorverhaltens.

Mit zwei Rotoren, die mit unterschiedlicher Drehzahl und/oder Drehrichtung rotieren, kann eine Relativbewegung erzeugt werden, die gegenüber einem Absolutwert der Drehzahl gering ist und von der Getriebestufe weiter untersetzt werden kann, um das abtriebsseitige Drehmoment zu erhöhen. Die unterschiedliche Drehzahl und/oder Drehrichtung der Rotoren wird auf konstruktiv einfache Weise vorzugsweise dadurch erreicht, dass die Rotoren untereinander eine unterschiedliche Anzahl von Polen aufweisen, die wiederum vorzugsweise von der Anzahl der Statorpole verschieden ist, so dass auch die Drehzahl der Rotoren von der Drehzahl des Magnetfelds des Stators abweicht.

Ein Verhältnis der Statorpole zu den Polen des Rotors, das von 2:3 und 3:2 verschieden ist, ermöglicht Drehzahl- und/oder Drehrichtungsunterschiede, womit - beispielsweise mittels zweier Rotoren - eine kleine Relativbewegung erzeugt werden kann, die zu einer Drehzahluntersetzung mit gleichzeitiger Erhöhung des abtriebsseitigen Drehmomentes führt.

Für einen geräuscharmen oder -losen Lauf des Motors mit geringer Reibung, geringer Wärmeentwicklung und geringem Energieverbrauch ist der Stator vorzugsweise elektronisch kommutiert, während die Rotoren vorzugsweise Permanentmagneten als Pole tragen. Dabei trägt in Umfangsrichtung des Stators vorzugsweise genau jeder zweite Statorpol eine Spule, um den magnetischen Fluss über den benachbarten Statorpol zu schließen. Stator und Rotoren können bezüglich der zentralen Achse in radialer Abfolge oder axialer Abfolge (Scheibenläufer) angeordnet sein. Zur Erzeugung der unterschiedlichen Drehzahlen können die Pole von Stator und Rotoren sich beispielsweise um zwei unterscheiden. Insbesondere die Verwendung der Permanentmagnete mit Metallen aus der Gruppe der seltenen Erden, die Art der Wickelung, welche auch bei geringem Strom ein relativ großes Drehmoment liefert, und die Kombination der Polzahlverhältnisse tragen jeweils zu einer weiteren Verringerung des Bauraumbedarfs bei.

Für ein Sperren eines von der Abtriebsseite eingeleiteten Drehmomentes kann beispielsweise vorgesehen sein, dass der Motor mit einem Motorritzel ein Zwischenrad antreibt, welches formschlüssig oder reibschlüssig sperrbar ist.

Vorzugsweise sind mehrere Motoren zu einem Multimotor zusammengefasst, welcher situationsangepasst unterschiedliche Leistungsanforderungen erfüllen kann und dabei bauraumsparend und ergonomisch günstig ist. In konstruktiv einfacher Weise sind beispielsweise die Motoren in parallelen Motorschächten eines gemeinsamen Motorträgers angeordnet, wobei ein gemeinsames Zwischenrad den Abtrieb des Multimotors bildet. Mit der Möglichkeit der modularen Leistungsdefinition können auch kurzfristig extrem hohe Leistungen abgerufen werden. Wenn beispielsweise die Motoren des Multimotors im Normalfall in Serie geschaltet sind, so können sie in einer besonderen Situation parallel geschaltet werden, um aufgrund der höheren Spannung eine höhere Leistung abzugeben. Eine solche Situation ist beispielsweise ein Crash oder ein bevorstehender Crash eines Fahrzeuges.

Der Motor ist vorzugsweise aus mehreren Motorvarianten auswählbar, in der radialen Ausführung beispielsweise ein Innenläufer-, ein Außenläufer- oder ein Doppelläufermotor. In Verbindung mit einer aus mehreren Getriebestufentypen auswählbaren Getriebestufe, wobei auch mehrere Getriebestufen hintereinander geschaltet sein können, steht ein modulares System zur Verfügung, das mit wenigen Modulen eine große Anzahl von Antriebseinheiten schafft, um die verschiedenen Anforderungen abzudecken.

Eine Ausbildung der Getriebestufe als Differentialgetriebe, welches unter Ausnutzung zweier unterschiedlicher Drehzahlen und/oder Drehrichtungen eine Bewegung eines Abtriebs um eine Achse erzeugt, können besonders kleine Relativbewegungen erzeugt werden, die eine geringe Drehzahl am Abtrieb ermöglichen. Dabei können die zwei unterschiedlichen Drehzahlen und/oder Drehrichtungen vom Motor in die Getriebestufe geleitet werden oder von der Getriebestufe selber erzeugt und durch Festlegen eines Bauteils mit einer solchen Drehzahl am anderen Bauteil als Abtrieb abgegriffen werden.

Die Getriebestufe ist vorzugsweise an einen Motor mit einem vorzugsweise elektronisch kommutierten Stator und wenigstens einem mit dem Stator magnetisch wechselwirkenden, um die Achse rotierenden, Permanentmagnete tragenden Rotor angeschlossen. Ein solcher Motor ist geräuscharm und läuft mit geringer Reibung. Die Getriebestufe kann in einer Reibrad-Ausführung mit hohlen und/oder massiven Rollen oder einer Zahnrad-Ausführung verwirklicht sein, wobei die erstgenannte Ausführung einfacher herzustellen ist, mit hohlen Rollen auch gewichtsreduzierend ist, und zugleich als Lager für einen Rotor dienen kann.

Neben dem elektromechanischen Wirkungsgrad des Motors ist für den Gesamtwirkungsgrad der Antriebseinheit auch der Wirkungsgrad der Getriebestufe von Bedeutung, weshalb koaxiale, vollsymmetrische Getriebebauformen mit einer möglichst geringen Anzahl von Einzellagern, insbesondere in Reibrad-Ausführung ohne jegliche Zusatzlagerung sondern vielmehr mit eigener Lagerfünktion, bevorzugt sind.

Die Getriebestufe kann als einstufiges Planeten-Differentialgetriebe mit einem Sonnenrad, einem Satz Planetenrollen oder -räder und einem Hohlrad ausgebildet sein, wobei das Sonnenrad und das Hohlrad drehfest mit je einem Rotor des Motors verbunden sind, während ein die Planetenrollen oder -räder tragender Steg als Abtrieb dient.

Die Getriebestufe kann aber auch als mehrstufiges (d.h. wenigstens zweistufiges) Planeten-Differentialgetriebe mit einem oder mehreren Sonnenrädern, einem oder mehreren Sätzen innerer Planetenrollen, einem oder mehreren Sätzen äußerer Planetenrollen und einem oder mehreren Außenringen ausgebildet sein, welche konzentrisch zur zentralen Achse angeordnet sind, wobei die Sonnenräder bzw. die Außenringe bezüglich der Achse axial benachbart angeordnet sind. Unterschiedliche Außendurchmesser der zwei Sonnenräder bzw. unterschiedliche Innendurchmesser der zwei Außenringe (oder jeweils unterschiedliche Elastizitäten) führen zu geringen Drehzahldifferenzen.

Die Getriebestufe kann auch als einstufiges Planeten-Differentialgetriebe mit einem oder mehreren Sonnenrädern, einem Satz vorzugsweise ungestufter Planetenrollen und einem oder mehreren Hohlrädern ausgebildet sein, welche konzentrisch zur zentralen Achse angeordnet sind, wobei die Sonnenräder bzw. Hohlräder bezüglich der Achse axial benachbart angeordnet sind. Unterschiedliche Elastizitäten und unterschiedliche Außendurchmesser der zwei Sonnenräder bzw. unterschiedliche Innendurchmesser der zwei Hohlräder rühren zu geringen Drehzahldifferenzen.

Die besagten Drehzahldifferenzen können beispielsweise abgegriffen werden, indem von den zwei besagten benachbarten Getriebeelementen mit unterschiedlichem Durchmesser eines gehäusefest und eines mit dem Abtrieb verbunden ist. In der Ausführung mit zwei Außenringen steht der gehäusefeste mit dem Stator in Verbindung, während das als Antrieb dienende Sonnenrad drehfest mit einem Rotor des Motors verbunden ist.

Um einerseits eine Vorspannung zum Zusammenhalt und zur Zentrierung der Getriebestufe aufzubringen und andererseits Toleranzen auszugleichen, weisen das Hohlrad oder der Außenring vorzugsweise einen elastischen Metallring und ein den Metallring aufnehmendes Elastomerbett auf. Eine das Elastomerbett mit dem Metallring aufnehmende und axial sichernde Halterung ist vorzugsweise mit einer Glocke des als Hohlwelle ausgebildeten Abtriebs verbunden.

Mit einem Schaltgetriebe kann die Drehrichtung des Abtriebs wahlweise geschaltet werden, ohne die Drehrichtung des Motors ändern zu müssen. Dies vereinfacht die Elektronik für den Motor erheblich. Zum Schalten ist in einer einfach herzustellenden Ausführung vorzugsweise ein durch eine Schaltspule definierter Elektromagnet vorgesehen, der mit zwei einander abstoßenden Permanent-Haltemagneten zusammenwirkt, welche geometrisch mit zwei benachbarten, ähnlichen Getriebeelementen gekoppelt sind, um diese reibschlüssig oder formschlüssig festzustellen. Mit einem Schaltgetriebe kann auch zwischen zwei unterschiedlichen Getriebeübersetzungen ausgewählt werden.

Die Getriebestufe ist vorzugsweise aus mehreren Getriebestufentypen auswählbar. In Verbindung mit einem aus mehreren Motorvarianten auswählbaren Motor steht ein modulares System zur Verfügung, das mit wenigen Modulen eine große Anzahl von Antriebseinheiten schafft, um die verschiedenen Anforderungen abzudecken.

Mit zwei Antriebseinheiten für zwei miteinander gekoppelte, einzelne Einsteller muß kein Übertragungselement und keine zusätzliche Stufe zur räumlichen Verlegung derselben vorgesehen werden. Zudem muß das lastaufnehmende Getriebe jedes Einstellers nur die Hälfte des Gesamtmoments als Blockiermoment aufnehmen, was neben dem Entfall des Übertragungselementes den konstruktiven Aufwand für diese Anforderung für jedes lastaufnehmende Getriebe deutlich reduziert.

Ein bevorzugter Einsteller ist als ein vielseitig einsetzbarer Dreheinsteller ausgebildet, insbesondere als selbsthemmender Getriebebeschlag mit einem ersten Beschlagteil und einem zweiten Beschlagteil, welche sich durch einen von der Antriebseinheit angetriebenen Exzenter relativ zueinander drehen. Die Beschlagteile können je einen angeformten Kragenzug oder eine angebrachte Hülse aufweisen, mittels dessen bzw. deren sie den Exzenter lagern und/oder wenigstens einen Teil der Antriebseinheit, vorzugsweise die gesamte Antriebseinheit einschließlich Elektronik für die Kommutierung, aufnehmen. Der Exzenter, der vorzugsweise auf einem der Kragenzüge oder Hülse gelagert ist, wird vorzugsweise gebildet durch ein antreibbares Mitnehmersegment, zwei gebogene Keilsegmente, zwischen deren Schmalseiten das Mitnehmersegment mit Spiel fasst, und eine zwischen die einander zugekehrten Breitseiten der Keilsegmente fassende und diese in Umfangsrichtung auseinanderdrückende Feder zur Spielfreistellung.

Um möglichst wenige Bauteile zu benötigen, erfolgt die Integration von Motor, Getriebestufe und lastaufnehmendem Getriebe, insbesondere Getriebebeschlag, vorzugsweise so, dass die Bauteile an den Schnittstellen mehrere Funktionen erfüllen, insbesondere die Beschlagteile gleichzeitig Funktionsteile des Motors und/oder der Getriebestufe sind. So kann ein Kragenzug mit dem gehäusefest zu haltenden ersten Außenring oder Hohlrad verbunden sein oder diesen bzw. dieses bilden. Das Mitnehmersegment kann am Abtrieb der Getriebestufe angeformt oder angebracht sein, insbesondere am zweiten Außenring oder Hohlrad. Die Beschlagteile können gleichzeitig Teile des magnetischen Kreises des Motors sein.

Im folgenden ist die Erfindung anhand eines in der Zeichnung dargestellten Ausführungsbeispiels mit verschiedenen Motorvarianten, Getriebestufentypen und jeweiligen Abwandlungen hierzu näher erläutert. Es zeigen
- Fig. 1: eine Prinzipskizze des Ausführungsbeispiels,
- Fig. 2A: eine erste Motorvariante,
- Fig. 2B: eine zweite Motorvariante,
- Fig. 2C: eine dritte Motorvariante,

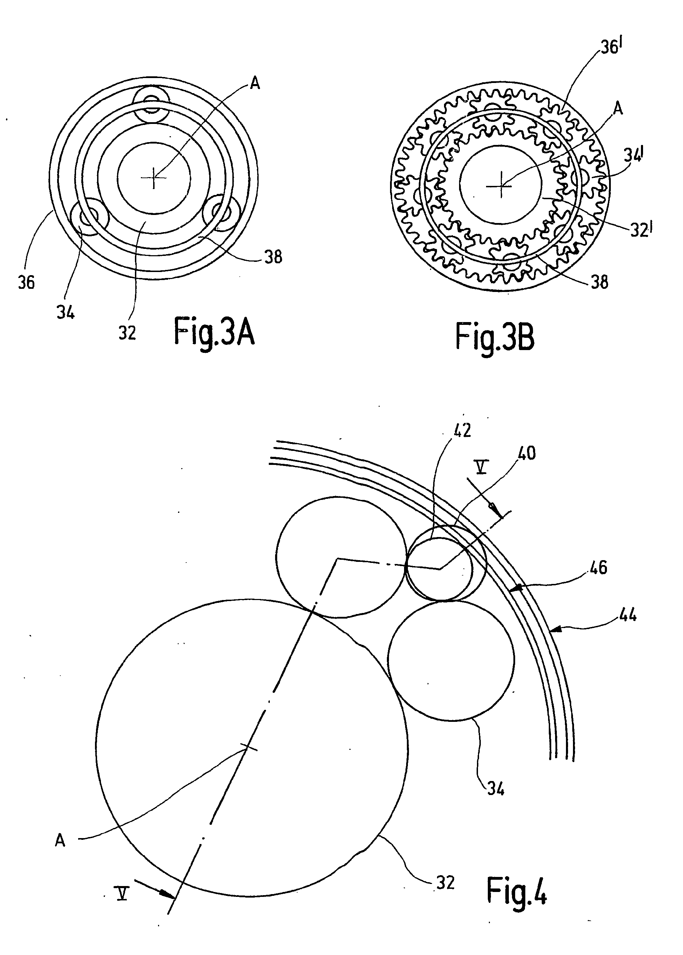

- Fig. 3A: ein erster Getriebestufentyp in Reibrad-Ausführung,
- Fig. 3B: der erste Getriebestufentyp in Zahnrad-Ausführung,

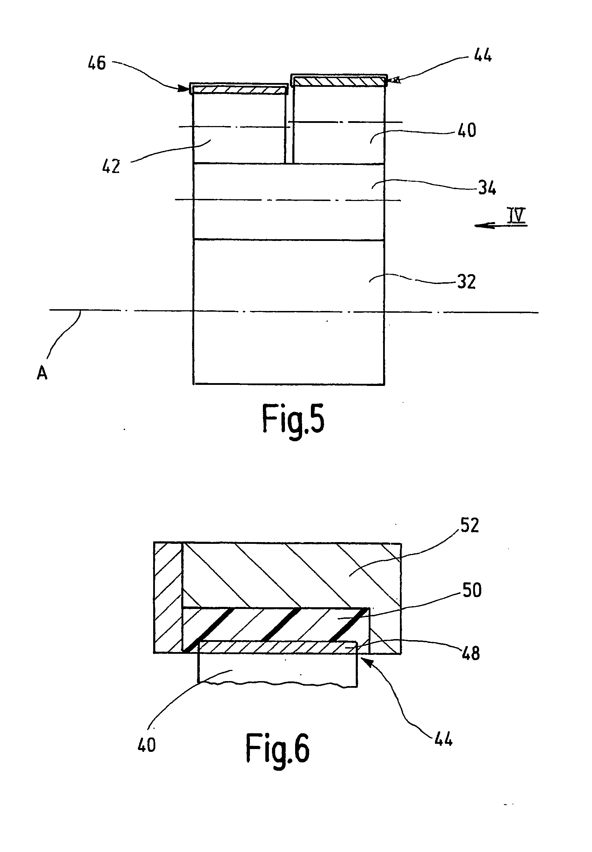

- Fig. 4: eine schematische Teilansicht eines zweiten Getriebestufentyps mit Blick in Richtung des Pfeiles IV aus Fig. 5,
- Fig. 5: einen Schnitt entlang der Linie V-V in Fig. 4,
- Fig. 6: eine vergrößerte Darstellung von Fig. 5,

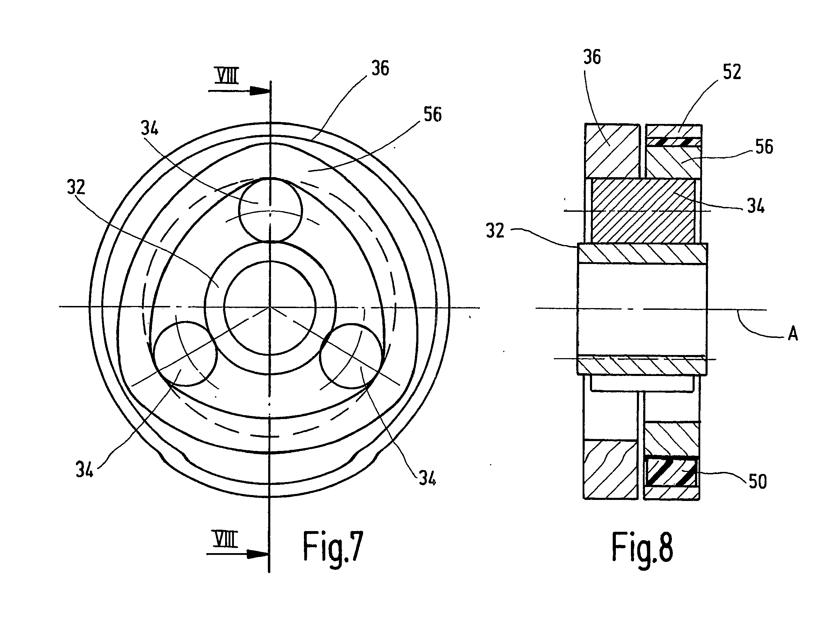

- Fig. 7: eine schematische Ansicht eines dritten Getriebestufentyps,
- Fig. 8: einen Schnitt entlang der Linie VIII-VIII in Fig. 7,
- Fig. 9: eine Stirnansicht einer schaltbaren Getriebestufe,
- Fig. 10: eine Seitenansicht zu Fig. 9,
- Fig. 11: einen Schnitt entlang der Linie XI-XI von Fig. 9,
- Fig. 12: eine Abwandlung der Getriebestufe von Fig. 9,
- Fig. 13A: eine Feststelleinrichtung für den Motor zum Sperren abtriebsseitig eingeleiteter Drehmomente im sperrenden Zustand,
- Fig. 13B: die Feststelleinrichtung von Fig. 13A mit anlaufendem Motor,
- Fig. 14: einen Multimotor, bei dem die Motorschächte noch leer sind,
- Fig. 15: den gemeinsamen Abtrieb der einzelnen Motoren des Multimotors,
- Fig. 16: die elektrische Verschaltung der einzelnen Motoren des Multimotors,
- Fig. 17: eine alternative Verschaltung der einzelnen Motoren in zwei Zuständen,

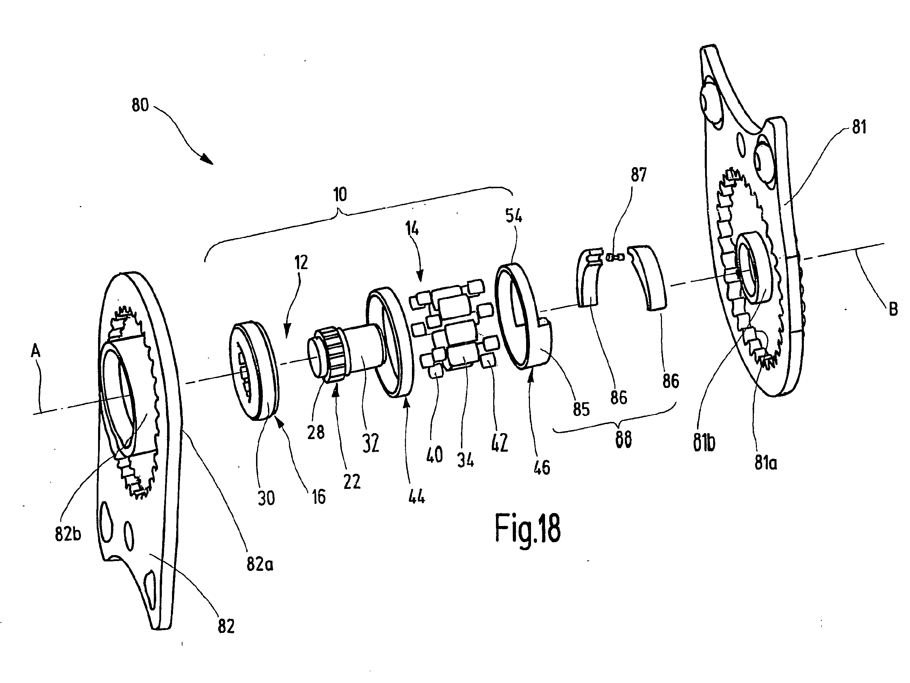

- Fig. 18: eine Explosionsdarstellung eines als selbsthemmender Getriebebeschlag ausgebildeten Einstellers, und

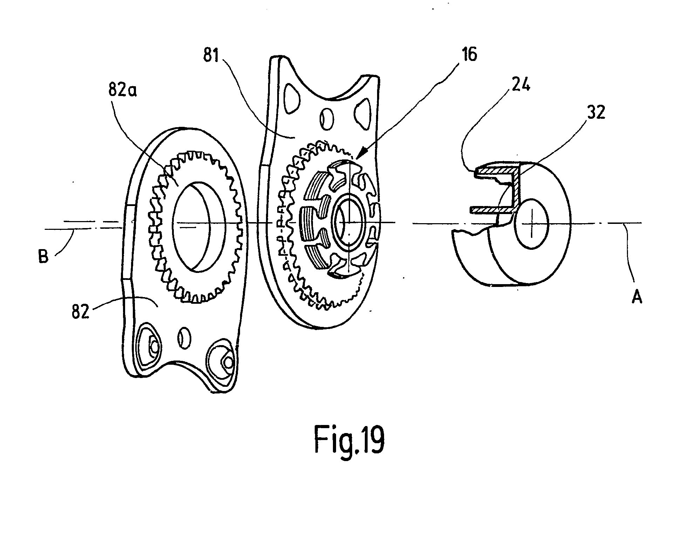

- Fig. 19: eine Abwandlung des Einstellers von Fig. 18.

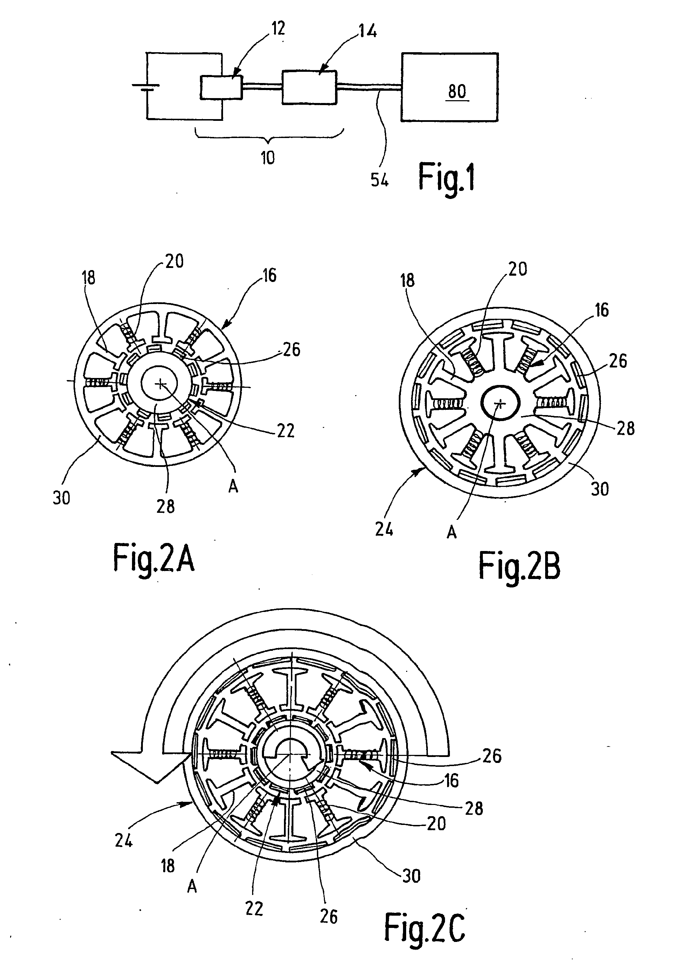

Eine Antriebseinheit 10 weist einen Motor 12 und eine abtriebsseitig vom Motor 12 vorgesehene Getriebestufe 14 auf. Der Motor 12 ist ein elektronisch kommutierter Motor mit einem Stator 16, dessen Statorpole 18 sternförmig um eine Achse A angeordnet sind. Die in Fig. 2A bis 2C senkrecht zur Zeichenebene verlaufende Achse A definiert die nachfolgenden Richtungsangaben in Zylinderlcoordinaten. Auf jeden zweiten der insgesamt zwölf Statorpole 18 ist eine Spule 20 gewickelt, wobei die Spulen 20 von einer nicht näher dargestellten, in den Motor 12 integrierten, Gleichstrom gespeisten Elektronik periodisch und zeitlich versetzt zueinander bestromt werden, um ein räumlich umlaufendes Magnetfeld zu erzeugen.

In drei verschiedenen Motorvarianten ist der Motor 12 als Innenläufermotor mit einem radial innerhalb des Stators 16 angeordneten Innenrotor 22 (erste Motorvariante), als Außenläufermotor mit einem radial außerhalb des Stators 16 angeordneten Außenrotor 24 (zweite Motorvariante) oder als Doppelläufermotor, kurz Duomotor, mit einem Innenrotor 22 und einem Außenrotor 24 (dritte Motorvariante) versehen. In allen Fällen drehen sich Innenrotor 22 bzw. Außenrotor 24 um die Achse A und tragen entlang der dem Stator 16 zugewandten Umfangsfläche Permanentmagnete 26, die in Umfangsrichtung abwechselnd gepolt sind. Alle in der vorliegenden Anmeldung verwendeten Permanentmagnete 26 weisen vorzugsweise eine hohe Permeabilität auf, beispielsweise indem sie Metalle aus der Gruppe der seltenen Erden enthalten. Ein Innenrückschlußring 28, welcher bei der ersten und dritten Motorvariante dem Innenrotor 22 und bei der zweiten Motorvariante dem Stator 16 zugeordnet ist, und ein Außenrückschlußring 30, welcher bei der ersten Motorvariante dem Stator 16 und bei der zweiten und dritten Motorvariante dem Außenrotor 24 zugeordnet ist, schließen den magnetischen Fluss. Die beiden Rückschlußringe 28 und 30 können gegebenenfalls zugleich als Träger der Permanentmagneten 26 dienen. Der Außenrotor 24 liefert aufgrund der an einem größeren Radius (im Vergleich zum Innenrotor 22) wirksamen Magnetkräfte ein größeres Drehmoment. Alle drei Motorvarianten sind vorzugsweise in Hohlwellenbauweise ausgebildet, d.h. der Bereich um die Achse A ist freigelassen.

Die Anzahl der Permanentmagnete 26 ist so gewählt, dass ihr Verhältnis zur Anzahl der Statorpole 18 ungleich 2:3 oder 3:2 ist, wodurch die Rotation von Innenrotor 22 bzw. Außenrotor 24 von der R-otation des Magnetfeldes im Stator 16 abweicht. Vorliegend weist der Innenrotor 22 zehn Permanentmagnete 26 und der Außenrotor 24 vierzehn Permanentmagnete 2 6 auf. Entsprechend der unterschiedlichen Anzahl der Permanentmagnete 26 rotieren bei der dritten Motorvariante (Duomotor) der Innenrotor 22 und der Außenrotor 24 vorliegend mit verschiedenen Drehzahlen (5:7) und zudem in entgegengesetzte Drehrichtungen, was in der Zeichnung durch Pfeile angedeutet ist.

Statt des radialen Aufbaus des Motors kann auch ein axialer Aufbau verwirklicht sein, d.h. die Rotoren (Scheibenläufer) und der Stator sind axial hintereinander angeordnet.

Die Getriebestufe 14 dient dazu, die Drehzahl des Motors 12 zu untersetzen bei gleichzeitiger Übersetzung des vom Motor 12 abgegebenen Drehmomentes. Die Getriebestufe 14 ist als Differentialgetriebe ausgebildet, wobei nachfolgend verschiedene Typen beschrieben sind. Zu jedem Typ existiert sowohl eine Ausführung als Zahnrad-Planeten-Differentialgetriebe mit flachen, gezahnten Planetenrädern als auch eine bevorzugte Ausführung als Reibrad-Planeten-Differentialgetriebe mit zylindrischen, glatten Planetenrollen, welche - ebenso wie das Sonnenrad - hohl oder massiv sein können. Eine Hohlwellenbauweise der Getriebestufe 14, bei welcher der Bereich um die zentrale Achse A frei bleibt, ist bevorzugt.

Der erste Getriebestufentyp ist ein einstufiges Planeten-Differentialgetriebe, welches zunächst in der Reibrad-Ausführung beschrieben wird. Die Getriebestufe 14 fluchtet mit der zentralen Achse A des Motors 12. Um die Achse A herum ist ein Sonnenrad 32 angeordnet, auf dessen Umfangsfläche drei Planetenrollen 34 entlang rollen, welche wiederum von einem Hohlrad 36 umschlossen werden. Das Hohlrad 36 sorgt für eine radiale Vorspannung und damit für ein gutes Abrollen der Planetenrollen 34 ohne Schlupf. Ein ringförmiger Steg 38 trägt auf axialen Zapfen die Planetenrollen 34.

Die bevorzugte Kombination dieses ersten Getriebestufentyps erfolgt mit der dritten Motorvariante, dem Duomotor, kann aber auch mit den anderen Motorvarianten, einschließlich bürstenkommutierter Motoren, erfolgen. Der Innenrotor 22 ist mit dem Sonnenrad 32 drehfest verbunden, während der Außenrotor 24 mit dem Hohlrad 36 drehfest verbunden ist. Der Steg 38 dient als Abtrieb der Antriebseinheit 10. Die jeweiligen Durchmesser sind in ihren Dimensionen auf die Drehzahlen, Drehmomente und Drehrichtungen der Rotoren 22 und 24 abgestimmt. Vorzugsweise sind die axialen Längen von Sonnenrad 32, Planetenrollen 34 und Hohlrad 36 so groß gewählt, dass mittels der Getriebestufe 14 eine Lagerung des Innenrotors 22 und des Außenrotors 24 relativ zum Stator 16 erfolgt.

Die Zahnrad-Ausführung stimmt bis auf die Oberflächenbeschaffenheit der Bauteile mit der Reibrad-Ausführung überein, weshalb die Bezugszeichen der entsprechenden Bauteile um ein Apostroph ergänzt sind. Sonnenrad 32', Planetenräder 34' und Hohlrad 36' sind jeweils gezähnt, sind aber in gleicher Weise mit dem Motor 12 gekoppelt und führen die gleichen Relativbewegungen aus, wobei der Steg 38 wieder als Abtrieb dient.

Der zweite Getriebestufentyp ist ein mehrstufiges Planeten-Differentialgetriebe, welches wiederum in der radial geschichteten Reibrad-Ausführung beschrieben wird, aber auch in einer Zahnrad-Ausführung möglich ist. Ebenso können wieder massive und/oder hohle Bauteile Verwendung finden. Um die Achse A herum ist wieder ein Sonnenrad 32 angeordnet, auf dessen Umfangsfläche eine Lage innerer Planetenrollen 34 angeordnet ist. In jedem Zwischenraum eingelegt befinden sich axial hintereinander angeordnet eine erste äußere Planetenrolle 40 und eine zweite äußere Planetenrolle 42, die jeweils ungefähr die halbe axiale Länge einer inneren Planetenrolle 34 aufweisen, wobei die zweite äußere Planetenrolle 42 einen gegenüber der ersten äußeren Planetenrolle 40 geringfügig kleineren Durchmesser hat, was sich beispielsweise durch die Verwendung von Zylinderrollen einerseits aus der metrischen und andererseits aus der zölligen Normreihe auf einfache Weise realisieren läßt. Anstelle der Zylinderform kann auch eine andere Form für die Wälzkörper verwendet werden.

Ein die ersten äußeren Planetenrollen 40 radial außen umschließender erster Außenring 44 und ein die zweiten äußeren Planetenrollen 42 radial außen umschließender zweiter Außenring 46, welche jeweils als Hohlrad dienen, spannen in radialer Richtung die Planetenrollen 40, 42 und 34 über alle Kontaktstellen gleichzeitig zum Sonnenrad 32 hin vor. Diese Vorspannung der zwei radial geschichteten Rollenreihen sorgen dafür, dass sich alle Rollen gegenseitig abstützen und sich eine konzentrische radialsymmetrische Anordnung ergibt, welche ohne Schlupf ist, so dass sich ein hoher Wirkungsgrad der Getriebestufe 14 ergibt. Ein Steg und damit eine innere Lagerung der Planetenrollen ist nicht erforderlich, aber nicht ausgeschlossen. Das Sonnenrad 32 kann stirnseitig mit radial nach außen weisenden Borden versehen sein, um die Planetenrollen in axialer Richtung zu sichern, was auch bei den anderen Getriebestufentypen möglich ist.

Die beiden Außenringe 44 und 46 sind prinzipiell gleich aufgebaut, so dass im folgenden nur der erste Außenring 44 beschrieben ist. Der erste Außenring 44 weist einen elastischen Metallring 48 aus Stahl auf, welcher auf seiner radial innen liegenden Seite an den ersten äußeren Planetenrollen 40 anliegt und mit einem kleineren Innendurchmesser ausgebildet ist, als es die geometrische Anordnung der umschlossenen Rollen erfordert, um die Vorspannung aufzubringen. Auf der radial außen liegenden Seite und an den beiden axialen Stirnseiten liegt der Metallring 48 in einem Elastomerbett 50 des ersten Außenrings 44. Der Metallring 48 und das aus Kunststoff bestehende Elastomerbett 50 sorgen zusammen für eine sehr gleichmäßige Anpressung. Zudem dämmt das Elastomerbett 50 die Laufgeräusche und mildert Momentenstöße. Der beschriebene zweiteilige Aufbau des ersten Außenrings 44 kann auch bei dem Hohlrad 36 bzw. 36' des ersten Getriebestufentyps verwirklicht sein. Zur axialen Sicherung des ersten Außenrings 44 mit seinem Metallring 48 und seinem Elastomerbett 50 ist eine Halterung 52 vorgesehen, welche zum Zwecke der Montage zweiteilig ausgebildet ist und das Elastomerbett 50 radial außen und mit zwei Borden stirnseitig übergreift, was auch bei den anderen Getriebestufentypen möglich ist.

Für eine Rotationssymmetrie, welche zur Vermeidung von Laufgeräuschen beiträgt, sind der Metallring 48 und das Elastomerbett 50 in Umfangsrichtung vorzugsweise durchgehend ausgebildet, jedoch können sie auch geschlitzt oder geteilt, insbesondere pfeilförmig geschlitzt sein, beispielsweise wenn sie drehfest mit der Halterung 52 verbunden sein sollen. Um die in der Getriebestufe 14 entstehende Wärme abzuführen, ist das Elastomerbett 50 vorzugsweise gut wärmeleitfähig, beispielsweise durch Einlagerung von metallischen oder anderen wärmeleitfähigen Fasern oder Füllen von Hohlräumen oder Ausschnitten mit einem wärmeleitfähigen Material. Zwischen dem Metallring 48 und dem Elastomerbett 50 kann auch eine Wärmeleitpaste vorgesehen sein.

Der kleine Durchmesserunterschied zwischen den ersten äußeren Planetenrollen 40 und den zweiten äußeren Planetenrollen 42 und in Folge davon des Innendurchmessers des ersten Außenrings 44 und des zweiten Außenrings 46 bedingt einen Unterschied in den Drehzahlen der beiden Außenringe 44 und 46. Diese kleine Drehzahldifferenz wird für eine große Untersetzung (beispielsweise 200) der Getriebestufe 14 ausgenutzt, wenn sie an den Motor 12 angeschlossen ist.

Die bevorzugte Kombination dieses zweiten Getriebestufentyps erfolgt mit der ersten oder zweiten Motorvariante, kann aber auch mit anderen Motorvarianten, einschließlich bürstenkommutierter Motoren, erfolgen. Der erste Außenring 44, genauer gesagt dessen Halterung 52, wird beispielsweise gehäusefest, d.h. mit dem Stator 16 verbunden. Das als Antrieb dienende Sonnenrad 32 wird mit dem Innenrotor 22 (bzw. dem Außenrotor 24 oder einem Steg 3 8) verbunden, während der zweite Außenring 46 als Abtrieb 54 dient. Hierbei wird die beispielsweise als Hohlwelle ausgebildete Abtriebswelle mit einem glockenartigen Endstück, am zweiten Außenring 46 angebracht, genauer gesagt an dessen Halterung 52. Vorliegend dreht sich der zweite Außenring 46 gleichsinnig zum Sonnenrad 32. Der gewählte Aufbau des zweiten Getriebestufentyps macht eine gesonderte Lagerung des Sonnenrades 32 und damit des Innenrotors 22 (bzw. Außenrotors 24) sowie des zweiten Außenrings 46, d.h. des Abtriebs 54, entbehrlich, schließt sie aber nicht aus. Die Lagerung des Innenrotors 22 (bzw. Außenrotors 24) in der Getriebestufe 14 hat jedoch den Vorteil, dass sie spielfrei ist und damit einen geräuschlosen Lauf des Innenrotors 22 (bzw. Außenrotors 24) bewirkt.

In abgewandelter Ausführung des zweiten Getriebestufentyps ist der (kleinere) zweite Außenring 46 gehäusefest und der (größere) erste Außenring 44 der Abtrieb, was eine gegensinnige Rotation von Sonnenrad 32 und erstem Außenring 4-4 bewirkt. Mit einem wahlweisen Festlegen der Außenringe 44 und 46 am Gehäuse und einem daraus resultierenden Wechsel des Abtriebs, beispielsweise mittels zweier Klinkensysteme oder einer später genauer beschriebenen Schaltung, kann eine Richtungsumkehr des Abtriebs bei gleichbleibender Drehrichtung des Sonnenrades 32 erreicht werden. Die erforderliche Elektronik des Motors 12 kann dann deutlich einfacher aufgebaut werden, was die Herstellung des Motors 12 vereinfacht.

Der zweite Getriebestufentyp kann weiter abgewandelt werden durch eine andere Anzahl von Rollensätzen. Allgemein können eine oder mehrere, axial hintereinander angeordnete Sonnenräder, eine gleiche Anzahl von inneren Planetenrollen in entsprechender axialer Anordnung, gegebenenfalls ein Satz von mittleren Planetenrollen zur Synchronisation, ein oder mehrere Sätze von axial hintereinander angeordneten, äußeren Planetenrollen und eine gleiche Anzahl von Außenringen in entsprechender axialer Anordnung vorgesehen sein. Die kleine Drehzahldifferenz wird entsprechend der beschriebenen Weise zwischen zwei benachbarten Getriebeelementen abgegriffen. Es ist auch denkbar, statt einem Sonnenrad plus einem Satz innerer Planetenrollen nur ein Sonnenrad mit entsprechend großem Durchmesser, welches direkt auf dem nächstäußeren Satz Planetenrollen rollt, und/oder statt einem Satz äußerer Planetenrollen plus einem Außenring nur einen Außenring mit entsprechend kleinem Durchmesser, welcher direkt auf dem nächstinneren Satz Planetenrollen rollt, zu verwenden.

Der dritte Getriebestufentyp ist wieder ein einstufiges Planeten-Differentialgetriebe, welches wiederum in einer radial geschichteten Reibrad-Ausführung beschrieben wird, aber auch in einer Zahnrad-Ausführung möglich ist. Die Getriebestufe 14 fluchtet mit der zentralen Achse A des Motors 12. Um die Achse A herum ist ein Sonnenrad 32 angeordnet, auf dessen Umfangsfläche drei Planetenrollen 34 entlang rollen. Auf etwa der Hälfte ihrer axialen Länge werden die ungestuften Planetenrollen 34 von einem ringförmigen ersten Hohlrad 36 umschlossen, welches eine geringe Elastizität aufweist, also relativ steif ist. Auf der anderen Hälfte ihrer axialen Länge werden die Planetenrollen 34 von einem zweiten Hohlrad 56 umschlossen, welches eine höhere Elastizität und einen kleineren Innenumfang als das erste Hohlrad 36 aufweist. Beides zusammen bedingt eine von der Kreisform abweichende, durch die Anlage an den Planetenrollen 34 leicht dreieckige Form des zweiten Hohlrades 56, welche in der Zeichnung leicht übertrieben dargestellt ist und sich im Betrieb dynamisch ändert. Die Elastizitätsunterschiede werden durch eine geeignete Materialwahl erreicht.

Die beiden Hohlräder 36 und 56 sorgen für eine radiale Vorspannung mit hoher Anpresskraft und damit für ein gutes Abrollen der Planetenrollen 34 ohne Schlupf, wobei das Sonnenrad 32 die radialen Kräfte kompensiert. Bei einem Antrieb über das Sonnenrad 32 anstatt über einen Steg braucht das Verhältnis der Hohlrad-Innenumfänge für eine Übersetzung von 200 nicht 200/199 sein, sondern kann großzügiger und damit toleranzunempfindlicher gewählt werden. Zusätzlich oder anstelle des Sonnenrades 32 kann ein die Planetenrollen lagernder Steg analog dern ersten Getriebestufentyp als Antrieb oder ein die Planetenrollen fixierender Lagerkäfig vorgesehen sein. Es können in abgewandelter Ausführung auch zwei axial hintereinander angeordnete Sonnenräder unterschiedlicher Elastizität in Kombination mit einem Hohlrad oder sonstige Kombinationen von durchgehenden oder geteilten Sonnenrädern und Hohlrädern unterschiedlicher Elastizität vorgesehen sein. Die Planetenrollen können auch gestuft sein.

Um die Verformung des zweiten Hohlrades 56 auf eine starre Welle für den Abtrieb 54 zu übertragen oder alternativ gehäusefest abzustützen, wird das zweite Hohlrad 56 von einem dieses radial außen umschließenden Elastomerbett 50 aufgenommen, beispielsweise einem Gummiring, welches wiederum radial innerhalb einer Halterung 52 angeordnet ist. Das Elastomerbett 50 kann auch als weiterer Bestandteil des einen Metallring aufweisenden Hohlrades 56 angesehen werden. Anstelle des Elastomerbettes 50 können aber auch elastische Speichen für das zweite Hohlrad 56 - oder ein axialer oder radialer Abgriff, gegebenenfalls unter Zwischenschaltung eines Topfes mit verformbaren Wänden oder einer Dämpferelemente aufweisenden Lochscheibe, vorgesehen sein. Die geringfügig ungleichförmige Bewegung des Hohlrades 56 wird vorzugsweise nicht oder nur geringfügig kompensiert.

Die bevorzugte Kombination dieses dritten Getriebestufentyps erfolgt mit der ersten oder zweiten Motorvariante, kann aber auch mit anderen Motorvarianten, einschließlich bürstenkommutierter Motoren, erfolgen. Das erste Hohlrad 36 wird beispielsweise gehäusefest, d.h. mit dem Stator 16 verbunden. Das als Antrieb dienende Sonnenrad 32 wird mit dem Innenrotor 22 (bzw. dem Außenrotor 24) verbunden, während das zweite Hohlrad 56 als Abtrieb 54 dient. Hierbei wird die beispielsweise als Hohlwelle ausgebildete Abtriebswelle mit einem glockenartigen Endstück am zweiten Hohlrad 56 angebracht, genauer gesagt an dessen Halterung 52. Die jeweiligen Durchmesser müssen allenfalls in den gleichen Größenordnungen sein, so dass durch die Wahl der Durchmesser eine weitere Übersetzungsmöglichkeit besteht. Vorzugsweise sind die axialen Längen von Sonnenrad 32, Planetenrollen 34 und Hohlrad 36 so groß gewählt, dass mittels der Getriebestufe 14 eine Lagerung des Innenrotors 22 und des Außenrotors 24 relativ zum Stator 16 erfolgt. Mit dem gewählten Aufbau des dritten Getriebestufentyps ist auch eine gesonderte Lagerung des Sonnenrades 32 und damit des Innenrotors 22 (bzw. Außenrotors 24) sowie des zweiten Hohlrades 56, d.h. des Abtriebs 54, entbehrlich, schließt sie aber nicht aus.

Die Getriebestufe 14 kann als Schaltgetriebe ausgeführt sein, mittels welchem bei einer einzigen, immer gleichbleibenden Drehrichtung des Motors 12 die Drehrichtung des Abtriebs 54 zwischen zwei unterschiedlichen Abtriebsdrehrichtungen schaltbar ist, was im folgenden anhand des zweiten Getriebestufentyps näher erläutert ist. Wie beim zweiten Getriebestufentyp ausgeführt, sitzt auf dem Sonnenrad 32 ein Satz innerer Planetenrollen 34, auf welchem wiederum ein Satz erster Planetenrollen 40 angeordnet ist, der von einem ersten Außenring 44 vorgespannt gehalten wird, und axial hierzu versetzt ein Satz zweiter Planetenrollen 42, der von einem zweiten Außenring 46 vorgespannt gehalten wird. Der zweite Außenring 46 bildet einen Teil des Abtriebs 54. Die axiale Länge der inneren Planetenrollen 34 ist so gewählt, dass axial neben dem ersten Außenring 44 auf der vom zweiten Außenring 46 abgewandten Seite ein dritter Außenring 58 angeordnet ist, welcher mit Vorspannung die inneren Planentenrollen 34 direkt umfasst. Die Außendurchmesser des ersten Außenrings 44 und des dritten Außenrings 58 stimmen zumindest näherungsweise überein.

Eine Schlingfeder 60 ist in ihrer Mitte gehäusefest abgestützt und ansonsten mit einem Teil ihrer Windungen um den ersten Außenring 44 und mit einem anderen Teil ihrer Windungen um den dritten Außenring 58 geschlungen. An den beiden freien Enden der Schlingfeder 60 ist jeweils ein Permanentmagnet als Haltemagnet 61 angeordnet, wobei die einander zugewandten Pole der beiden Haltemagnete 61 einander abstoßen. Die Haltemagneten 61 weisen vorzugsweise eine hohe Permeabilität auf, beispielsweise indem sie Metalle aus der Gruppe der seltenen Erden enthalten. Zwischen den beiden Haltemagneten 61 ist ein Kern 62 aus Weicheisen angeordnet, um den herum eine mit wahlweiser Polung bestrombare Schaltspule 63 gewickelt ist.

Im unbestromten Zustand der Schaltspule 63 liegen beide Haltemagnete 61 am Kern 62 an, welcher den magnetischen Fluss jeweils lokal schließt. Beide Außenringe 44 und 58 und damit die Getriebestufe 14 sind dadurch festgestellt. Mit Aufnahme der Bestromung der Spulen 20 des Stators 16 wird auch die Schaltspule 63 bestromt. Je nach Stromrichtung wird einer der beiden Haltemagnete 61 weiterhin angezogen und der andere abgestoßen. Letzterer öffnet dadurch diese Seite der Schlingfeder 60, wodurch der entsprechende Außenring 44 oder 58 freigeben wird. Aufgrund der kleinen Durchmesserunterschiede der Außenringe 44 und 58, welche normalerweise Drehzahlunterschiede bewirken, definiert sich je nachdem, welcher Außenring 44 oder 58 festgestellt wird, bei gleichbleibender Drehrichtung des Motors 12 und damit des Sonnenrades 32 aus dem Feststellen die Drehrichtung des zweiten Außenringes 46 und damit des Abtriebs 54, wobei die beiden möglichen Abtriebsdrehrichtungen entgegengesetzt zueinander sind (Unidirektionalmotor).

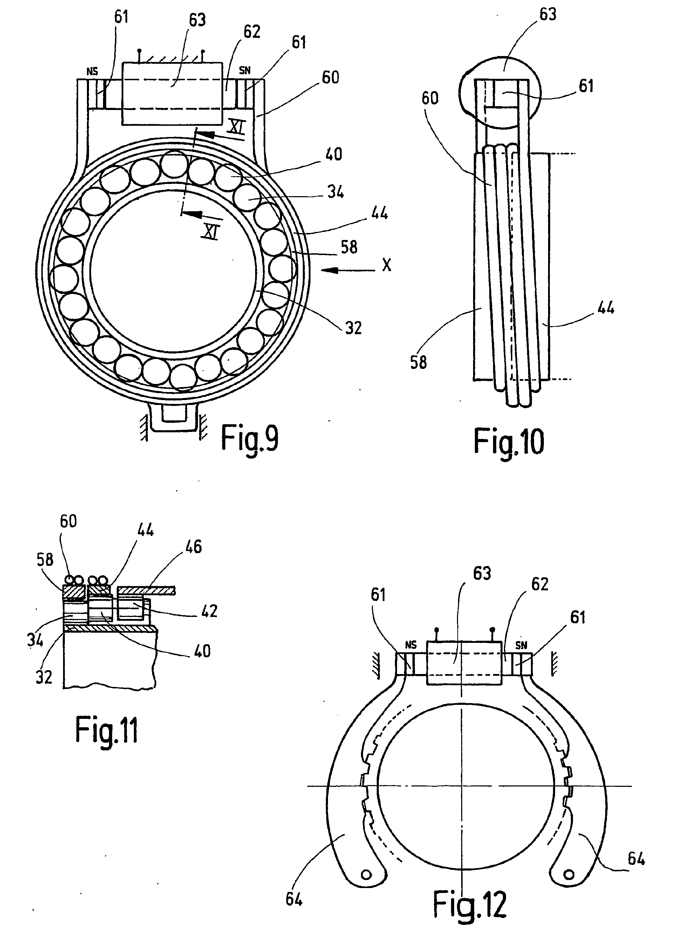

Außer dem beschriebenen Schaltgetriebe mit reibschlüssiger Feststelleinrichtung ist in abgewandelter Ausführung auch ein Schaltgetriebe mit einer formschlüssigen Lösung denkbar. Wie in Fig. 12 dargestellt, können die Haltemagnete 61 bespielsweise an Zahnklinken 64 angeordnet sein, welche die jeweils eine Verzahnung tragenden Außenringe schaltbar verriegeln. Die Funktionsweise ist wie zuvor beschrieben.

Die Feststelleinrichtung kann auch dazu dienen, im Ruhezustand Drehmomente zu sperren, die vom Abtrieb 54 eingeleitet werden. Ein solches Sperren braucht nicht an der Getriebestufe 14 erfolgen, es kann auch zwischen Motor 12 und Getriebestufe 14 vorgesehen sein.

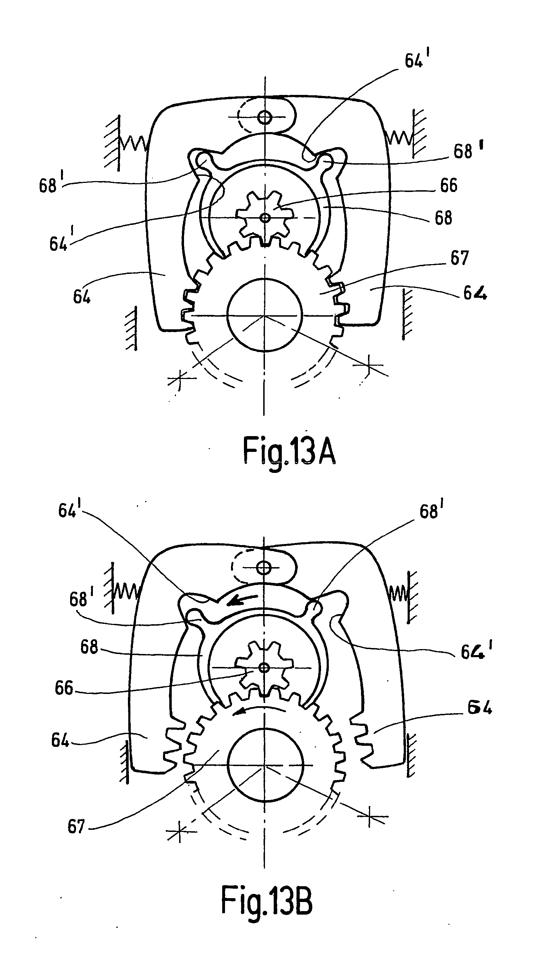

Wie in Fig. 13A dargestellt, ist beispielsweise die Abtriebswelle des Motors 12 einerseits mit einem Motorritzel 66 versehen, welches in ein mit dem Sonnenrad 32 verbundenes Zwischenrad 67 greift, und andererseits reibschlüssig mit einer Steuerscheibe 68 mit zwei Nocken 68' verbunden. Im Ruhezustand greifen zwei federbelastete Zahnklinken 64 wenigstens näherungsweise formischlüssig in das Zwischenrad 67 und sperren dieses, insbesondere gegen abtriebseitig eingeleitete Drehmomente. Mit Einsetzen der Drehbewegung des Motors 12 wird die Steuerscheibe 68 mitgedreht, wobei die Nocken 68' in Anlage an Steuerkonturen 64' der Zahnklinken 64 kommen und dadurch die Zahnklinken 64 aus dem Zwischenrad 67 ausheben, wie in Fig. 13B dargestellt. Das Zwischenrad 67 kann nun ungehindert angetrieben werden, wobei der Reibschluß zur Steuerscheibe 68 vorzugsweise aufgehoben wird. Bei einer bevorzugten Ausführungsvariante ist die Steuerscheibe 68 nicht reibschlüssig mit einer drehenden Achse, sondern drehfest mit dem nicht rotierenden Motorteil und dieses wiederum um einen geringen Winkelbereich drehbar zum Gehäuse gelagert. Infolge des Drehmomentes zwischen Motorritzel 66 und derart angebundener Steuerscheibe 68 verdreht sich diese nun automatisch beim Einschalten des Motors 12 und steuert somit die Zahnklinken 64 ebenfalls automatisch aus. Die Art der Motorkommutierung ist für diese Feststelleinrichtung unerheblich. Das Sperren kann auch in einer reibschlüssigen Ausführung erfolgen.

Die erfindungsgemäß vorgesehene Antriebseinheit 10 ist nicht auf eine Kombination eines einzelnen Motors 12 mit einer einzelnen Getriebestufe 14 beschränkt. So kann es für bestimmte Leistungsanforderungen sinnvoll sein, mehrere Motoren 12 zu kombinieren, beispielsweise um zeitlich veränderliche Anforderungen zu erfüllen. In einem Motorträger 70 sind mehrere Motorschächte 71 vorgesehen, die jeweils um ein zentrales Lager für ein gemeinsames Zwischenrad 67 angeordnet sind. Die in die Motorschächte 71 eingeführten Motoren 12, beispielsweise drei Stück, greifen dann mit Motorritzeln 66 in dieses Zwischenrad, welches - wie vorstehend beschrieben -gegen ein abtriebsseitig eingeleitetes Drehmoment gesperrt sein kann. Der so gebildete Multimotor 72 ist dann mittels des Zwischenrades 67 an eine Getriebestufe 14 gekoppelt, beispielsweise an ein Sonnenrad 32 eines der oben beschriebenen Getriebestufentypen. Die Art der Motorkommutierung ist hierbei unerheblich.

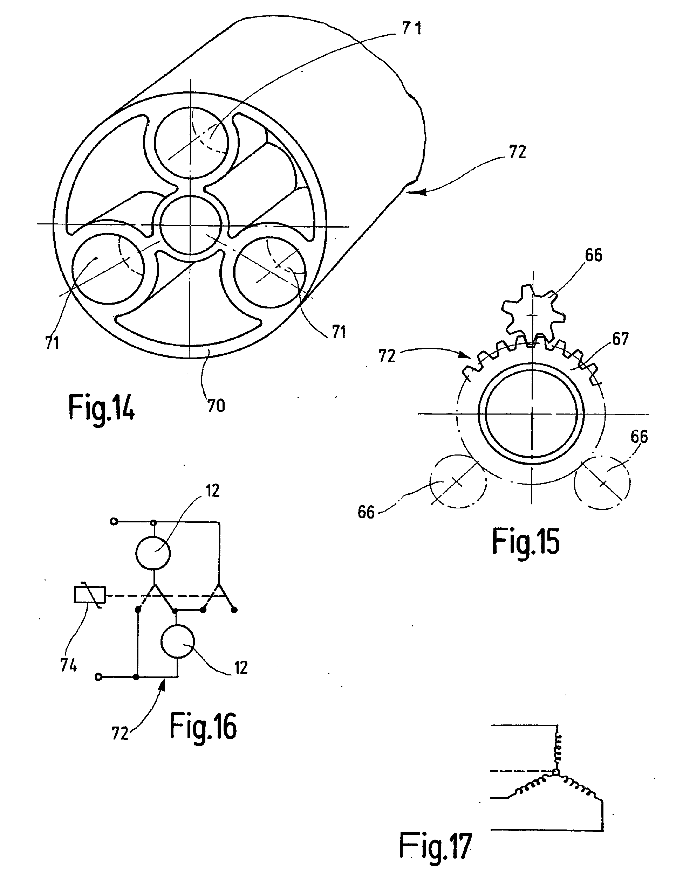

Die mechanisch parallel zusammengeschalteten Motoren 12 werden elektrisch gesehen im Normalfall in Serie betrieben. In Fig. 16 ist dies anhand von zwei Motoren 12 dargestellt und in an sich bekannter Weise auf mehrere Motoren erweiterbar. Zwischen den Motoren 12 sind ein oder mehrere Relais 74 vorgesehen, worunter auch elektronische Ersatzschaltungen verstanden werden sollen. Im Normalfall verteilt sich aufgrund der Serienschaltung die Betriebsspannung wenigstens näherungsweise gleichmäßig auf die vorhandenen Motoren 12.

In bestimmten, besonderen Situationen kann es wünschenswert sein, dass die Antriebseinheit 10 eine höhere Drehzahl und/oder ein höheres Drehmoment abgibt. Eine solche Situation ist - im Falle eines Einsatzes der Antriebsvorrichtung 10 in einem Fahrzeug - ein Crash. Die von der Antriebseinheit 10 angetriebenen Vorrichtungen sollen dann möglichst rasch bestimmte Stellungen einnehmen, um den Insassenschutz zu erhöhen, wofür hierfür in Kauf genommen wird, dass die Antriebseinheit 10 eventuell anschließend unbrauchbar ist. Eine weitere besondere Situation wäre eine Schnelleinstellung eines oder mehrerer Einsteller eines Fahrzeugsitzes über einen großen Bereich hinweg, beispielsweise ein Vorklappen der Lehne (Freischwenken) in Kombination mit einer Längseinstellung, um den Zugang zu einer hinteren Sitzreihe zu erleichtern (Easy-Entry).

Eine mechanische Lösung für die Schnelleinstellung wäre bei dem zweiten und dritten Getriebestufentyp in der Ausbildung als Schaltgetriebe mit wählbarer Getriebeübersetzung realisierbar, wenn der Unterschied der Geometrien der Außenringe 44 und 46 oder der Elastizitäten der Hohlräder 36 und 56 genügend groß ist. Unter Einsatz der beim Schaltgetriebe vorhandenen Feststelleinrichtung, welche durch Umschalten abwechselnd genau einen Außenring 44 oder 46 oder genau ein Hohlrad 36 oder 56 feststellt, können am Abtrieb unterschiedliche Geschwindigkeiten und damit unterschiedliche Getriebeübersetzungen erzeugt werden. Wenn die Drehrichtung des Motors 12 gleich bleibt, ändert sich die Drehrichtung des Abtriebs, was der oben beschriebenen Situation beim Unidirektionalinotor entspricht. Um eine gleichbleibende Drehrichtung des Abtriebs zu erzeugen, ist - außer dem Umschalten der Feststelleinrichtung - noch die Drehrichtung des Motors 12 zu ändern.

In der vorliegenden Ausführung des Multimotors 72 werden in der besonderen Situation durch eine nicht näher dargestellte Fahrzeugelektronik die vorhandenen Relais 74 so betätigt, dass die Serienschaltung aufgehoben wird und die Motoren 12 parallel geschaltet werden. Durch die Erhöhung der anliegenden Spannung erhöht sich die Leistungsaufnahme der einzelnen Motoren 12 und des Multimotors 72 insgesamt, zumindest kurzfristig, vorzugsweise so lange, bis die angetriebenen Vorrichtungen die gewünschten Stellungen erreicht haben. Thermodynamische Effekte können hierbei aufgrund der kurzen Betätigungszeiten vernachlässigt werden. Die Ansteuerung der Relais 74 kann - im Falle der Anwendung für eine Crashsituation - bereits vor dem eigentlichen Crash erfolgen, wenn die vorhandenen Crashsensoren der Fahrzeugelektronik Anzeichen für einen bevorstehenden Crash liefern. Die Lösung ist also presave-fähig.

Im Falle eines Betriebs des Motors 12 oder Multimotors 72 mit einer Sternschaltung der Spulen 20 besteht die Möglichkeit, wie in Fig. 17 angedeutet, in der besonderen Situation den Betrieb in eine Sternschaltung mit Mittelanzapfung umzuschalten, um den effektiven Widerstand zu verringern und die Leistung ebenfalls kurzfristig zu erhöhen. Die Bestromung mit der Sternschaltung eignet sich auch besonders gut für eine Kombination mit der dritten Motorvariante und einer Feststelleinrichtung. Einer der beiden Rotoren gemäß der dritten Motorvariante wird bei Eintreten der besonderen Situation mittels der Feststelleinrichtung mechanisch blockiert. Die nachgeschaltete Getriebestufe 14 wirkt dann als Differentialgetriebe mit höherer Übersetzung (weniger geringerer Untersetzung). Der andere Rotor läuft nach Umschaltung auf die Mittelanzapfung wegen des geringeren Widerstandes mit höherer Leistungsaufnahme, was dann letztendlich die gewünschte Leistungserhöhung am Abtrieb 54 bewirkt.

Die erfindungsgemäß vorgesehene Antriebseinheit 10 wird vorliegend zum Antrieb eines Einstellers 80 innerhalb eines Fahrzeuges verwendet, wobei die Antriebseinheit 10 auch anderswo eingesetzt werden kann. Der Einsteller 80 weist im allgemeinen Fall zwei relativ zueinander bewegbare Bauteile auf, zwischen denen die Antriebseinheit 10 mit ihrem Abtrieb 54 wirkt. Die geringe Drehzahl des Abtriebs 54 liefert ein großes Drehmoment. Es können Mittel zur Umsetzung der Drehbewegung des Abtriebs 54 in eine Linearbewegung im Einsteller 80 vorgesehen sein. Es kann auch für jede Einstellrichtung des Einstellers 80 eine eigene Antriebseinheit vorgesehen sein. Beispiele für den Einsteller 80 wären im Bereich von Fahrzeugsitzen ein Lehnenneigungseinsteller, insbesondere in der Form eines selbsthemmenden Getriebebeschlags, ein zwischen zwei Getriebegliedern eines Viergelenks wirkender Sitzhöheneinsteller, ein die Vorderkante eines Sitzkissens schwenkender Sitzneigungseinsteller, oder ein den Fahrzeugsitz schienengestützt in Längsrichtung verfahrender Sitzlängseinsteller. Der Einsteller 80 kann aber auch ein Fensterheber oder ein Außenspiegeleinsteller sein.

In etlichen Anwendungsfällen wirken zwei gleichartige, einzelne Einsteller 80 zusammen, um gemeinsam ein Bauteil zu bewegen. Beispielsweise sind bei Fahrzeugsitzen in der Regel auf beiden Fahrzeugsitzseiten die gleichen, einzelnen Einsteller 80 vorhanden, welche in bekannter Lösung paarweise mittels einer drehbaren Übertragungsstange gekoppelt und synchronisiert sind. Mit der erfindungsgemäßen Antriebseinheit 10, die nur sehr wenig Bauraum bedarf, kann für jeden einzelnen Einsteller 80 eines Paares eine eigene Antriebseinheit 10 vorgesehen sein, welche dann beispielsweise mittels der Elektronik zur elektronischen Kommutierung des Motors 12 oder - im Falle eines Fahrzeugsitzes - über die Steifigkeit der Struktur des Fahrzeugsitzes synchronisiert sind.

Im folgenden ist als ein bevorzugter Einsatzzweck der erfindungsgemäßen Antriebseinheit 10 die Integration in einen Einsteller 80 mit einem lastaufnehmenden Getriebe beschrieben, welcher als selbsthemmender Getriebebeschlag ausgebildet ist und beispielsweise der Neigungseinstellung einer Lehne eines Fahrzeugsitzes dient. Dieser Einsteller 80 weist ein erstes Beschlagteil 81 mit einem hohlradartig ausgebildeten Zahnkranz 81a und ein mit dem ersten Beschlagteil 81 in Getriebeverbindung stehendes, zweites Beschlagteil 82 mit einem ausgeprägten Zahnrad 82a auf, wobei die beiden Beschlagteile 81 und 82 das lastaufnehmende Getriebe bilden. Der Durchmesser des Kopfkreises des Zahnrades 82a ist um etwa eine Zahnhöhe geringer als der Durchmesser des Fußkreises des Zahnkranzes 81 a , und die Anzahl der Zähne des Zahnrades 82a ist kleiner als die Anzahl der Zähne des Zahnkranzes 81a. Angetrieben von der Antriebseinheit auf eine nachfolgend beschriebene Weise ist so eine relative Abwälzbewegung des Zahnrades 82a am Zahnkranz 81 a möglich, welche sich als Relativdrehung der beiden Beschlagteile 81 und 82 mit einer überlagerten Taumelbewegung zeigt.

Für Lagerungszwecke ist am ersten Beschlagteil 81 konzentrisch zum Zahnkranz 81 a ein erster Kragenzug 81b angeformt, welcher eine Nebenachse B definiert, und am zweiten Beschlagteil 82 konzentrisch zum Zahnrad 82a ein zweiter Kragenzug 82b angeformt (oder stattdessen eine Hülse eingepresst), welcher die zentrale Achse A definiert. Dabei ist der Durchmesser des zweiten Kragenzuges 82b größer als derjenige des ersten Kragenzuges 81b.

Die erfindungsgemäße Antriebseinheit 10, welche vorliegend aus einem Motor 12 der oben beschriebenen ersten Motorvariante und einer Getriebestufe 14 des oben beschriebenen zweiten Getriebestufentyps in Reibrad-Ausführung kombiniert ist, aber auch in anderer Kombination aufgebaut sein könnte, ist bauraumoptimiert im Zentrum des lastaufnehmenden Getriebes angeordnet in das zweite Beschlagteil 82 integriert, genauer gesagt in den zweiten Kragenzug 82b. Der Stator 16 ist mit seinem Außenrückschlußring 30 in den zweiten Kragenzug 82b in der axial vom ersten Beschlagteil 81 abgewandten Hälfte eingepresst, wobei die nicht näher dargestellte Elektronik auch innerhalb des zweiten Kragenzuges 82b auf der axial vom ersten Beschlagteil 81 abgewandten Seite angeordnet ist.

Der Innenrotor 22 ist innerhalb des Stators 16 angeordnet, wobei an seinem Innenrückschlußring 28 das hohle Sonnenrad 32 angeformt oder konzentrisch angebracht ist. Die inneren Planetenrollen 34 sind radial auf das Sonnenrad 32 geschichtet, während die ersten äußeren Planetenrollen 40 und die zweiten äußeren Planetenrollen 42 auf die inneren Planetenrollen 34 geschichtet sind. Der erste Außenring 44 und der zweite Außenring 46 spannen die Planetenrollen zusammen und sorgen zugleich für eine spielfreie Lagerung des Innenrotors 22. Der erste Außenring 44 ist ebenfalls in den zweiten Kragenzug 82b eingepresst, also wie der Stator 16 gehäusefest, oder der zweite Kragenzug 82b bildet selber den ersten Außenring 44.

Der zweite Außenring 46, welcher zugleich als Abtrieb 54 der Antriebseinheit 10 dient, ist mit seinem geringeren Durchmesser innerhalb des zweiten Kragenzuges 82b drehbar, wobei der zweite Kragenzug 82b als Gleitlagerbuchse ausgebildet ist oder eine solche an dem axial dem ersten Beschlagteil 81 zugewandten Ende des zweiten Kragenzuges 82b eingepresst ist. An den zweiten Außenring 46 ist ein axial vorspringendes Mitnehmersegment 85 angeformt, welches sich über etwa ein Viertel des Umfangs erstreckt. Das Mitnehmersegment 85 kann auch an einem separat ausgebildeten und mit dem zweiten Außenring 46 drehfest verbundenen Ring vorgesehen sein. In der gleichen Ebene wie das Mitnehmersegment 85 sind zwei auf dem ersten Kragenzug 81a gelagerte, gebogene Keilsegmente 86 angeordnet, wobei das Mitnehmersegment 85 mit Spiel zwischen die Schmalseiten der Keilsegmente 86 fasst. Eine zwischen die einander zugekehrten Breitseiten der Keilsegmente 86 fassende Feder 87 drückt die Keilsegmente 86 in Umfangsrichtung auseinander. Das Mitnehmersegment 85 und die Keilsegmente 86 definieren zusammen einen Exzenter 88.

Mit der Antriebseinheit 10 wird der Exzenter 88 gedreht, wobei die Drehzahl gegenüber der Frequenz des Magnetfeldes des Stators 16 stark untersetzt und das Drehmoment stark erhöht ist. Mit jeder vollen Umdrehung des am zweiten Beschlagteil 82 entlanggleitenden Exzenters 88 wird der Zahnkranz 81a des ersten Beschlagteils 81 um einen Zahn am Zahnrad 82a des zweiten Beschlagteils 82 entlang weitergedreht, wobei die Nebenachse B in gleichem Maße langsam um die Achse A wandert. Dies ergibt dann die zuvor beschriebene Relativdrehung mit überlagerter Taumelbewegung, welche die Einstellbewegung darstellt. Schwankungen des Drehmomentes aufgrund der Taumelbewegung können durch die Elektronik zur Kommutierung des Motors 12 kompensiert werden, beispielsweise durch eine drehwinkel- und/oder zeitabhängige Drehzahl.

Trotz der Integration der Antriebseinheit 10 in das lastaufnehmende Getriebe des Einstellers 80 ist die Antriebseinheit 10 als Hohlwellenantrieb ausgebildet, d.h. sowohl beim Motor 12 als auch bei der Getriebestufe 14 bleibt der zentrale Bereich um die Achse A herum frei, so dass im Bedarfsfall doch eine Übertragungsstange oder dergleichen eingebaut werden kann.

Die große Masse des Einstellers 80 bietet Vorteile im akustischen Bereich. Durch die feste, enge und bei der vorgespannten Reibrad-Ausführung auch spielfreie Anbindung der kleinen rotierenden Masse des Innenrotors 22 an die große Masse des Einstellers 80 werden die Körperschallschwingungen des Innenrotors 22 zwar gut weitergeleitet, führen aber wegen der großen zu beschleunigenden Masse nur zu geringen Amplituden. Die große Masse des Einstellers 80 bietet durch den Kontakt zwischen Stator 16 und lastaufnehmendem Getriebe auch thermodynamische Vorteile.

In einer abgewandelten Ausführung der Integration der Antriebseinheit in den Einsteller 80 ist der Stator 16 flächig auf der vom zweiten Beschlagteil 82 abgewandten Außenseite des ersten Beschlagteils 81 angebracht, wobei dessen erster Kragenzug 81b die zentrale Achse A für die Antriebseinheit 10 definiert. Ein zur Achse A konzentrischer Außenrotor 24 bildet die Zylinderwand eines Topfes, der einen innenliegenden, ebenfalls zur Achse A konzentrischen, einen geringeren Durchmesser aufweisenden Bund aufweist, welcher ein Sonnenrad 32 bildet. Eine Getriebestufe 14 vom zweiten oder dritten Getriebestufentyp ist räumlich zwischen dem Sonnenrad 32 und dem - vorzugsweise zugleich einen ersten Außenring 44 bildenden - ersten Kragenzug 81b angeordnet und treibt den Exzenter 88 an, welcher wiederum das zweite Beschlagteil 82 in zuvor beschriebener Weise bewegt. Dabei wandert die nunmehr durch das zweite Beschlagteil 82 definierte Nebenachse B langsam um die Achse A. Eigenschaften und Funktionen entsprechend ansonsten der zuvor beschriebenen Ausführung.

### Bezugszeichenliste

- 10: Antriebseinheit
- 12: Motor
- 14: Getriebestufe
- 16: Stator
- 18: Statorpol
- 20: Spule
- 22: Innenrotor
- 24: Außenrotor
- 26: Permanentmagnet
- 28: Innenrückschlußring
- 30: Außenrückschlußring
- 32, 32': Sonnenrad
- 34: (innere) Planetenrolle
- 34': Planetenrad
- 36, 36': (erstes) Hohlrad
- 38: Steg
- 40: erste äußere Planetenrolle
- 42: zweite äußere Planetenrolle
- 44: erster Außenring
- 46: zweiter Außenring
- 48: Metallring
- 50: Elastomerbett
- 52: Halterung
- 54: Abtrieb
- 56: zweites Hohlrad
- 58: dritter Außenring
- 60: Schlingfeder
- 61: Haltemagnet
- 62: Kern
- 63: Schaltspule
- 64: Zahnklinke
- 64': Steuerkontur
- 66: Motorritzel
- 67: Zwischenrad
- 68: Steuerscheibe
- 68': Nocken
- 70: Motorträger
- 71: Motorschacht
- 72: Multimotor
- 74: Relais
- 80: Einsteller
- 81: erstes Beschlagteil
- 81a: Zahnkranz
- 81b: erster Kragenzug
- 82: zweites Beschlagteil
- 82a: Zahnrad
- 82b: zweiter Kragenzug
- 85: Mitnehmersegment
- 86: Keilsegment
- 87: Feder
- 88: Exzenter
- A: Achse
- B: Nebenachse

## Patentansprüche

1. Einsteller (80) für einen Fahrzeugsitz, insbesondere für einen Kraftfahrzeugsitz, mit wenigstens zwei ein lastaufnehmendes Getriebe bildenden Beschlagteilen (81, 82), die mittels einer Antriebseinheit (10) relativ zueinander beweglich sind, wobei die Antriebseinheit (10) einen insbesondere elektronisch kommutierten Motor (12) und eine Getriebestufe (14) aufweist und in das lastaufnehmende Getriebe integriert ist, und wobei der Motor (12) wenigstens einen vom lastaufnehmenden Getriebe gelagerten, um eine Achse (A) rotierenden Rotor (22, 24) aufweist, **dadurch gekennzeichnet, dass** wenigstens die Getriebestufe (14) in einem Zentrum eines der Beschlagteile (81, 82) des lastaufnehmenden Getriebes angeordnet ist.

2. Einsteller nach Anspruch 1, **dadurch gekennzeichnet, dass** der Rotor (22, 24) über die Getriebestufe (14) bis zu dem lastaufnehmenden Getriebe durchgehend spielfrei gelagert ist.

3. Einsteller nach Anspruch 1 oder 2, **dadurch gekennzeichnet, dass** der Motor (12) samt Getriebestufe (14) - zumindest weitgehend - im Zentrum eines der Beschlagteile (81, 82) des lastaufnehmenden Getriebes angeordnet ist.

4. Einsteller nach einem der vorhergehenden Ansprüche, **dadurch gekennzeichnet, dass** zwei einzelne Einsteller (80) zusammenwirken, wobei in jedem einzelnen Einsteller (80) eine Antriebseinheit (10) in das lastaufnehmende Getriebe integriert ist.

5. Einsteller nach Anspruch 4, **dadurch gekennzeichnet, dass** die beiden Antriebseinheiten (10) mittels einer Elektronik zur elektronischen Kommutierung der Motoren (12) synchronisiert sind.

6. Einsteller nach einem der vorhergehenden Ansprüche, **dadurch gekennzeichnet, dass** der Einsteller (80) als selbsthemmender Getriebebeschlag ausgebildet ist, bei dem sich das erste Beschlagteil (81) und das zweite Beschlagteil (82) durch einen von der Antriebseinheit (10) angetriebenen Exzenter (88) relativ zueinander drehen.

7. Einsteller nach Anspruch 6, **dadurch gekennzeichnet, dass** die Beschlagteile (81, 82) je einen angeformten Kragenzug (81b, 82b) oder eine angebrachte Hülse aufweisen, mittels dessen bzw. deren sie den Exzenter (88) lagern und/oder wenigstens einen Teil der Antriebseinheit (10) aufnehmen.

8. Einsteller nach Anspruch 6 oder 7, **dadurch gekennzeichnet, dass** der Exzenter (88) durch ein antreibbares Mitnehmersegment (85), zwei gebogene Keilsegmente (86), zwischen deren Schmalseiten das Mitnehmersegment (85) mit Spiel fasst, und eine zwischen die einander zugekehrten Breitseiten der Keilsegmente (86) fassende und diese in Umfangsrichtung auseinanderdrückende Feder (87) gebildet wird.

9. Einsteller nach einem der vorhergehenden Ansprüche, **dadurch gekennzeichnet, dass** die Bauteile an den Schnittstellen zwischen Motor (12), Getriebestufe (14) und lastaufnehmendem Getriebe mehrere Funktionen erfüllen, insbesondere die Beschlagteile (81, 82) gleichzeitig Funktionsteile des Motors (12) und/oder der Getriebestufe (14) sind.

10. Einsteller nach Anspruch 8 und 9, **dadurch gekennzeichnet, dass** das Mitnehmersegment (85) an einem Abtrieb (54), Steg (38), Außenring (46) oder Hohlrad (56) der Getriebestufe (14) angeformt oder angebracht ist.

11. Einsteller nach einem der vorhergehenden Ansprüche, **dadurch gekennzeichnet, dass** die Drehzahlen des oder der Motoren (12) so gesteuert und/oder geregelt werden, dass das angetriebene Beschlagteil (81, 82) sich mit einer vorgegebenen Winkelgeschwindigkeit bewegt.

## Claims

1. Adjuster (80) for a vehicle seat, especially for a motor vehicle seat, having at least two fitting elements (81, 82) forming a load-carrying gear, and being movable relative to one another using a drive unit (10), while the drive unit (10) presents a motor (12), which is, in particular, electronically commutated, and a gear stage (14), and is integrated into the load-carrying gear, and while the motor (12) presents at least one rotor (22, 24) supported by the load-carrying gear and rotating around an axis (a), **characterized in that** at least the gear stage (14) is arranged at one centre of one of the fitting elements (81, 82) of the load-carrying gear.

2. Adjuster as claimed in claim 1, **characterized in that** the rotor (22, 24) is supported continuously without play via the gear stage (14) up to load-carrying gear.

3. Adjuster as claimed in claim 1 or 2, **characterized in that** the motor (12) together with the gear stage (14) is, at least largely, arranged at the centre of one of the fitting elements (81, 82) of the load-carrying gear.

4. Adjuster as claimed in any of the above-mentioned claims, **characterized in that** two individual adjusters (80) are cooperating while, in every single adjuster (80), a drive unit (10) is integrated into the load-carrying gear.

5. Adjuster as claimed in claim 4, **characterized in that** the two drive units (10) are synchronised with the electronic commutation of the motors (12) using an electronic system.

6. Adjuster as claimed in any of the above-mentioned claims, **characterized in that** the adjuster (80) is designed as a self-locking gear fitting in which the first fitting element (81) and the second fitting element (82) rotate relative to one another by means of an eccentric (88) driven by the drive unit (10).

7. Adjuster as claimed in claim 6, **characterized in that** the fittings (81, 82) each present an integrally formed collar formation (81b), 82b) or a mounted sleeve by means of which they support the eccentric (88) and/or at least accommodate a part of the drive unit (10).

8. Adjuster as claimed in claim 6 or 7, **characterized in that** the eccentric (88) is formed by a driveable catch segment (85), two bent wedge segments (86), between the narrow side of which the catch segment (85) grasps with a clearance, and by a spring (87) grasping between the two wide sides of the wedge segments (86) turned towards one another and pressing these apart in circumferential direction.

9. Adjuster as claimed in any of the foregoing claims, **characterized in that** the components at the interfaces between motor (12), gear stage (14) and load-carrying gear perform several functions, and that, ,in particular, the fitting elements (81, 82) are functional parts of the motor (12) and/or of the gear stage (14) at the same time.

10. Adjuster as claimed in claims 8 and 9, **characterized in that** the wedge segment (85) is integrally formed or attached at an output (54), web (38), outer ring (46) or ring gear (56) of the gear stage (14).

11. Adjuster as claimed in any of the foregoing claims, **characterized in that** the rotational speeds of the motor(s) (12) are controlled and/or regulated such that the driven fitting element (81, 82) moves at a specified angular velocity.

## Revendications

1. Elément de réglage (80) pour un siège de véhicule, en particulier pour un siège de véhicule automobile, comportant au moins deux ferrures (81, 82) formant une transmission supportant la charge et mobiles l'une par rapport à l'autre au moyen d'une unité d'entraînement (10), ladite unité d'entraînement (10) comportant un moteur (12), notamment à commutation électronique, et un étage de transmission (14), et étant intégrée à la transmission supportant la charge, et le moteur (12) comportant au moins un rotor (22, 24) monté dans la transmission supportant la charge et rotatif autour d'un axe (A), **caractérisé en ce qu'**au moins l'étage de transmission (14) est disposé au centre d'une des ferrures (81, 82) de la transmission supportant la charge.

2. Elément de réglage selon la revendication 1, **caractérisé en ce que** le rotor (22, 24) est monté généralement sans jeu jusqu'à la transmission supportant la charge par l'intermédiaire de l'étage de transmission (14).

3. Elément de réglage selon la revendication 1 ou la revendication 2, **caractérisé en ce que** le moteur (12) et l'étage de transmission (14) sont disposés - au moins en majeure partie - au centre d'une des ferrures (81, 82) de la transmission supportant la charge.

4. Elément de réglage selon l'une des revendications précédentes, **caractérisé en ce que** deux éléments de réglage (80) individuels coopèrent, une unité d'entraînement (10) étant intégrée à la transmission supportant la charge dans chaque élément de réglage (80) individuel.

5. Elément de réglage selon la revendication 4, **caractérisé en ce que** les deux unités d'entraînement (10) sont synchronisées au moyen d'un équipement électronique pour la commutation électronique des moteurs (12).

6. Elément de réglage selon l'une des revendications précédentes, **caractérisé en ce que** ledit élément de réglage (80) est réalisé comme ferrure de transmission autobloquante, où la première ferrure (81) et la deuxième ferrure (82) sont rotatives l'une par rapport à l'autre au moyen d'un excentrique (88) entraîné par l'unité d'entraînement (10).

7. Elément de réglage selon la revendication 6, **caractérisé en ce que** les ferrures (81, 82) comportent chacune une collerette formée par emboutissage (81b, 82b) ou une douille rapportée, permettant d'y loger l'excentrique (88) et/ou d'y recevoir au moins une partie de l'unité d'entraînement (10).

8. Elément de réglage selon la revendication 6 ou la revendication 7, **caractérisé en ce que** l'excentrique (88) est formé par un segment d'entraîneur (85) actionnable, deux segments en coins cintrés (86), entre les extrémités minces desquels le segment d'entraîneur (85) a prise avec un jeu, et un ressort (87) ayant prise entre les extrémités larges opposées des segments en coins (86) et écartant ceux-ci dans la direction périphérique.

9. Elément de réglage selon l'une des revendications précédentes, **caractérisé en ce que** les composants remplissent plusieurs fonctions aux interfaces entre moteur (12), étage de transmission (14) et transmission supportant la charge, en particulier **en ce que** les ferrures (81, 82) sont simultanément des éléments fonctionnels du moteur (12) et/ou de l'étage de transmission (14).

10. Elément de réglage selon les revendications 8 et 9, **caractérisé en ce que** le segment d'entraîneur (85) est formé ou rapporté sur un entraînement (54), une crémaillère (38), une bague extérieure (46) ou une couronne (56) de l'étage de transmission (14).

11. Elément de réglage selon l'une des revendications précédentes, **caractérisé en ce que** les vitesses de rotation du ou des moteurs (12) sont commandées et/ou régulées de telle manière que la ferrure (81, 82) entraînée se déplace avec une vitesse angulaire prescrite.
